# EUROPÄISCHE PATENTSCHRIFT

(11) **EP 3 084 948 B1**
(45) Veröffentlichungstag und Bekanntmachung des Hinweises auf die Patenterteilung: **17.07.2019**
(21) Anmeldenummer: 14705080.1
(22) Anmeldetag: 06.02.2014
(51) Int. Cl.: H02M 7/06, H02M 7/10, H02J 3/38

(54) **ANORDNUNG UND ANLAGE ZUM ÜBERTRAGEN ELEKTRISCHER LEISTUNG MIT EINEM RESERVEGLEICHRICHTER**
ARRANGEMENT AND INSTALLATION FOR TRANSMITTING ELECTRIC POWER WITH A RESERVE RECTIFIER
DISPOSITIF ET INSTALLATION POUR LE TRANSFERT DE PUISSANCE ÉLECTRIQUE AU MOYEN D'UN REDRESSEUR DE RÉSERVE

(43) Veröffentlichungstag der Anmeldung: 26.10.2016
(73) Patentinhaber: Siemens Aktiengesellschaft, 80333 München (DE)
(72) Erfinder: CHRIST, Timo, 91336 Heroldsbach (DE); MENKE, Peter, 96237 Oberfüllbach (DE); SCHETTLER, Frank, 91058 Erlangen (DE)
(86) Internationale Anmeldenummer: PCT/EP2014/052353
(87) Internationale Veröffentlichungsnummer: WO 2015/117656

(56) Entgegenhaltungen:
- WO-A1-2008/039121
- WO-A1-2014/131457
- DE-A1- 10 044 096
- DE-A1-102008 022 077

## Beschreibung

Zur Energieübertragung ist beispielsweise in dem Artikel von S. Bernal-Perez et al., "Off-shore Wind Farm Grid Connection using a Novel Diode-Rectifier and VSC-Inverter based HVDC Transmission Link", IECON, 2011, Seiten 3186-3191, eine Energieübertragungsanlage für den Einsatz in Windenergieanlagen offenbart. Die bekannte Energieübertragungsanlage umfasst einen als Diodengleichrichter ausgebildeten ungeregelten Umrichter, der gleichspannungsseitig mit einem Gleichspannungszwischenkreis verbunden ist. Der Gleichspannungszwischenkreis erstreckt sich zwischen dem Diodengleichrichter und einem spannungseinprägenden Umrichter, der im Englischen auch als "Voltage Source Converter (VSC)" bezeichnet wird. Der ungeregelte Gleichrichter ist über Transformatoren und ein Wechselspannungsnetz mit einem Windpark der Windenergieanlage verbunden. Zum Zwecke der Blindleistungskompensation sind passive Filterelemente mit dem Wechselspannungsnetz des Windparks verbunden.

Die Übertragung von elektrischer Energie mit Hilfe von Gleichstrom ist bei vielen Anwendungen, insbesondere bei langen Übertragungsstrecken ökonomisch vorteilhaft. Zu diesen Anwendungen zählen beispielsweise die bereits erwähnte Anbindung von im Meer aufgestellten Windparks an ein landseitiges Versorgungsnetz, die Energieversorgung von offshore-Einrichtungen (beispielsweise Ölplattformen) von Land aus oder die Verbindung von zwei durch ein Meer getrennten Festlandnetzen.

Bei Gleichstromübertragungseinrichtungen werden oft zwei selbstgeführte Umrichter eigesetzt, die mittels einer Gleichspannungsverbindung miteinander verbunden sind. Eine solche Anordnung erlaubt einen bidirektionalen Leistungsfluss auch zwischen schwachen Wechselspannungsnetzen, so dass beispielsweise eine Stabilisierung eines schwachen Wechselspannungsnetzes durch ein starkes Wechselspannungsnetz erreicht werden kann.

Nachteilig sind jedoch bei selbstgeführten Umrichtern ein hoher Infrastrukturaufwand und hohe Kosten. Die DE102008022077A1 zeigt ein Speisung eines Generators mittels zweier parallel angeordneter Gleichrichter.

Das Aufstellen solcher Umrichter bei Offshore-Anwendungen im Meer ist zudem aufgrund des immer noch hohen Gewichts und Volumens der Umrichter kostenintensiv.

Die Verwendung eines ungeregelten Gleichrichters erlaubt den Leistungstransport zwar nur in eine Richtung, weist jedoch den Vorteil auf, dass Verluste, das Volumen und das Gewicht des Gleichrichters im Vergleich mit einem selbstgeführten Umrichter deutlich herabgesetzt werden können. Darüber hinaus sind im ungeregelten Gleichrichter verhältnismäßig kompakte Leistungshalbleiter einsetzbar. Auch die Steuerung und Kühlung des ungeregelten Gleichrichters kann weniger aufwändig gestaltet werden. Ist das erste Wechselspannungsnetz beispielsweise an eine Energieerzeugungsanlage, wie einen Windpark, angebunden, dann ist die Richtung des Leistungstransports im Wesentlichen vorgegeben, so dass diese Einschränkung keinen gravierenden Nachteil darstellt.

Die Aufgabe der Erfindung besteht darin, eine Anordnung mit Gleichrichterwirkung sowie eine Anlage zur Übertragung von elektrischer Energie vorzuschlagen, die sich durch vergleichsweise hohe Funktionssicherheit auszeichnet.

Die Aufgabe wird erfindungsgemäß gelöst durch eine Anordnung mit einer ersten Gruppe von gleichspannungsseitig eine Reihenschaltung bildenden Gleichrichtern die an ein erstes Wechselspannungsnetz anschließbar sind, sowie mit einem Reservegleichrichter, der in einem Fehlerfall eines der Gleichrichter mittels geeigneter Schaltvorrichtungen mit dem ersten Wechselspannungsnetz und gleichspannungsseitig mit einer ersten Gleichspannungsleitung unter Ausbildung einer ergänzten Reihenschaltung mit den Gleichrichtern elektrisch verbindbar ist, so dass der Reservegleichrichter den fehlerhaften Gleichrichter ersetzt.

Ein Vorteil der erfindungsgemäßen Anordnung besteht darin, dass die in Reihe geschalteten Gleichrichter für geringere Spannungen ausgelegt werden können. Durch die Verwendung mehrerer Gleichrichter kann die Anordnung einfacher an die jeweiligen Anforderungen anpassbar. Darüber hinaus ist jeder der Gleichrichter verhältnismäßig leicht und kann daher relativ kostengünstig, beispielsweise auf dazu vorgesehenen Fundamenten, beispielsweise dem Fundament einer der Windenergieanlagen, aufgestellt werden. Der jeweilige Gleichrichter ist beispielsweise über einen ihm zugeordneten Transformator entweder mit einer Sammelschiene des Wechselspannungsnetzes oder aber mit verschiedenen Strängen des Wechselspannungsnetzes verbunden, wobei in jedem Strang beispielsweise mehrere Windenergieanlagen angeordnet sein können. Ein weiterer Vorteil wird darin gesehen, dass in einem Fehlerfall eines Gleichrichters, beispielsweise dem Ausfall des Gleichrichters, eine Unterbrechung des gesamten Leistungsflusses zwischen dem an den Windpark angeschlossenen Wechselspannungsnetz und dem Energieversorgungsnetz vermieden ist. Im Fall einer Anbindung eines Offshore-Windparks kann zudem durch die erfindungsgemäße Anordnung das grundsätzliche Problem vermieden werden, dass bei Anbindung über eine einzelne Hochspannungsgleichstromübertragung (HGÜ) -Verbindung bei einem Ausfall eines Kabels beziehungsweise Gleichrichters eine sehr hohe Einspeiseleistung verloren geht.

Allerdings geht der Anwendungsbereich der Erfindung über die Windparkanbindung hinaus. Die erfindungsgemäße Anordnung kann vielmehr ebenfalls in anderen Energieversorgungseinrichtungen mit anderen Energieerzeugungseinheiten eingesetzt werden.

In einem Fehlerfall eines der Gleichrichter, beispielsweise bei einer Beschädigung des Gleichrichters oder Fehlern auf seiner Wechselspannungsseite, kann der Reservegleichrichter in Betrieb genommen werden und den fehlerhaften Gleichrichter ersetzen, wodurch die Spannung auf der Gleichspannungsseite der Reihenschaltung der Gleichrichter konstant gehalten und auf der Wechselspannungsseite eine gleichmäßige Lastaufteilung gewährleistet werden kann. Im Fehlerfall eines Gleichrichters kann auf diese Weise weiterhin mit voller Leistung Energie übertragen werden, wobei die Kosten niedriger sind, verglichen mit einer voll redundanten Ausführung.

Gemäß einer vorteilhaften Ausführungsform der Erfindung umfasst die Anordnung ferner eine zweite Gruppe gleichspannungsseitig eine Reihenschaltung bildender Gleichrichter, die an ein zweites Wechselspannungsnetz anschließbar sind, wobei der Reservegleichrichter im Fehlerfall eines der Gleichrichter der ersten Gruppe mittels geeigneter Schaltvorrichtungen mit dem ersten Wechselspannungsnetz und gleichspannungsseitig mit einer zweiten Gleichspannungsleitung unter Ausbildung einer ergänzten Reihenschaltung mit den Gleichrichtern der ersten Gruppe elektrisch verbindbar ist. Mit anderen Worten teilen sich die beiden Gruppen einen Reservegleichrichter, wodurch die Kosten erheblich gesenkt werden können.

Vorteilhaft ist der Reservegleichrichter im Fehlerfall eines der Gleichrichter der zweiten Gruppe mittels geeigneter Schaltvorrichtungen mit dem zweiten Wechselspannungsnetz und gleichspannungsseitig mit der zweiten Gleichspannungsleitung unter Ausbildung einer ergänzten Reihenschaltung mit den Gleichrichtern der zweiten Gruppe elektrisch verbindbar.

Ferner ist der Reservegleichrichter bevorzugt im Fehlerfall eines der Gleichrichter der zweiten Gruppe mittels geeigneter Schaltvorrichtungen mit dem zweiten Wechselspannungsnetz und gleichspannungsseitig mit der ersten Gleichspannungsleitung unter Ausbildung einer ergänzten Reihenschaltung mit den Gleichrichtern der zweiten Gruppe elektrisch verbindbar.

Bevorzugt ist ferner in einem Fehlerfall der ersten Gleichspannungsleitung die erste Gruppe von Gleichrichtern mittels geeigneter Schaltvorrichtungen mit der zweiten Gleichspannungsleitung verbindbar. Besonders bevorzugt ist darüber hinaus in einem Fehlerfall der zweiten Gleichspannungsleitung die zweite Gruppe von Gleichrichtern mittels geeigneter Schaltvorrichtungen mit der ersten Gleichspannungsleitung verbindbar. Somit können der Reservegleichrichter und die Schaltvorrichtungen dazu verwendet werden, eine Funktionseinschränkung der Anlage auch bei Fehlern in den Gleichspannungsleitungen zu vermeiden.

Gemäß einer bevorzugten Ausführungsform umfasst die Anordnung ferner einen ersten netz- oder selbstgeführten Umrichter, wobei der erste Umrichter mit der ersten Gleichspannungsleitung sowie wechselspannungsseitig mit einem ersten Energieversorgungsnetz elektrisch verbindbar ist.

Gemäß einer weiteren bevorzugten Ausführungsform umfasst die Anordnung ferner einen zweiten netz- oder selbstgeführten Umrichter, wobei der zweite selbstgeführte Umrichter mit der zweiten Gleichspannungsleitung sowie wechselspannungsseitig mit einem zweiten Energieversorgungsnetz elektrisch verbindbar ist. Somit kann die beschriebene Funktionalität der Anordnung in gleicher Weise bei Fehlern der Umrichter genutzt werden.

Die beschriebene Konfiguration ist selbstredend auf mehr als zwei Gruppen von Gleichrichtern erweiterbar, wobei sich alle Gruppen den Reservegleichrichter wie zuvor beschrieben teilen. Ebenso ist eine beliebige Verkettung von Gruppen mit dem zwischen ihnen angeordneten Reservegleichrichter möglich.

Auch können das erste und das zweite Energieversorgungsnetz miteinander verbunden sein.

Die oben aufgeführte Aufgabe wird ferner durch eine Anlage zum Übertragen elektrischer Leistung zwischen wenigstens einem ersten Windpark mit wenigstens einer Windkraftanlage und dem ersten Energieversorgungsnetz gelöst, die die zuvor beschriebene Anordnung umfasst, wobei erfindungsgemäß die erste Gruppe von Gleichrichtern über das erste Wechselspannungsnetz mit dem ersten Windpark verbindbar ist.

Gemäß einer bevorzugten Ausführungsform ist die Anlage ferner zum Übertragen elektrischer Leistung zwischen einem zweiten Windpark und dem zweiten Energieversorgungsnetz eingerichtet, wobei die zweite Gruppe von Gleichrichtern über das zweite Wechselspannungsnetz mit dem zweiten Windpark verbindbar ist.

Die Regelung der Lastflüsse in den einzelnen Wechselspannungsleitungen und Gleichspannungsleitungen kann beispielsweise ein Mastercontroller übernehmen, der einen entsprechenden Regelalgorithmus verwendet. Der Mastercontroller stellt dabei sicher, dass die gewünschten Lastflüsse nicht zu einer Überlastung in bestimmten Leitungen führen. Dazu übermittelt er an die Umrichter beziehungsweise an einen Windparkcontroller die jeweiligen Sollleistungswerte. Dort werden mittels eines entsprechenden Regelalgorithmus die den Sollleistungswerten zugeordneten Sollspannungen eingestellt.

Gemäß einer Ausführungsform der Erfindung sind die netz oder selbstgeführten Umrichter an Land und die Gleichrichter in einem Meer oder einer See angeordnet.

Bevorzugt sind die Gleichrichter Diodengleichrichter. Diodengleichrichter sind besonders leicht und kostengünstig in Herstellung und Betrieb.

Vorzugsweise ist wenigstens ein selbstgeführer Umrichter ein modularer Mehrstufenumrichter. Der modulare Mehrstufenumrichter weist Phasenmodule auf, deren Anzahl der Anzahl der Phasen des angeschlossenen Energieversorgungsnetzes entspricht. Dabei ist jedes Phasenmodul als Dreipol ausgebildet und weist zwei äußere Gleichspannungsanschlüsse und einen mittleren Wechselspannungsanschluss auf. Zwischen dem Wechselspannungsanschluss und jedem Gleichspannungsanschluss erstreckt sich ein Phasenmodulzweig, der eine Reihenschaltung aus zweipoligen Submodulen aufweist. Jedes Submodul ist mit einem Energiespeicher, wie beispielsweise einem unipolaren Kondensator, sowie einer dazu parallel angeordneten Leistungshalbleiterschaltung ausgerüstet. Die Leistungshalbleiterschaltung kann zum Beispiel als eine dem Fachmann bekannte Halb- oder Vollbrückenschaltung ausgebildet sein. Alternativ sind auch netzgeführte Umrichter einsetzbar.

Zweckmäßigerweise ist jeder Gleichrichter jeweils mittels eines Überbrückungsschalters überbrückbar. Jeder Gleichrichter kann dazu bevorzugt zwei Gleichspannungsklemmen aufweisen, die durch Schließen des Überbrückungsschalters miteinander verbunden werden.

Gemäß einem Ausführungsbeispiel der Erfindung umfasst die Anlage eine Mehrzahl von Gruppen von Diodengleichrichtern sowie eine Mehrzahl von Umrichtern, die gleichspannungsseitig über Gleichspannungsleitungen miteinander verbunden sind, wobei die Gleichspannungsleitungen in einer Multiterminal- oder einer vermaschten Netzanordnung miteinander verbunden sind. In diesem Fall kann die Gesamtleistungsbilanz mittels des Master-Controllers gesteuert werden. Die Gleichspannung in den Gleichspannungsverbindungen wird über Sollleistung der Windparks und die Wechselspannung in den Wechselspannungsnetzen geregelt. Auf diese Weise ist die Realisierung einer Multiterminal-Anordnung unter Verwendung von Gleichrichtern, wie beispielsweise Diodengleichrichtern, möglich.

Im Folgenden werden anhand von Figuren 1 bis 7 Ausführungsbeispiele der erfindungsgemäßen Anlage näher erläutert.
Figuren 1 bis 6 zeigt ein Ausführungsbeispiel einer erfindungsgemäßen Anlage zum Übertragen elektrischer Leistung in schematischer Darstellung;
Figur 7 zeigt ein weiteres Ausführungsbeispiel der erfindungsgemäßen Anlage in schematischer Darstellung.

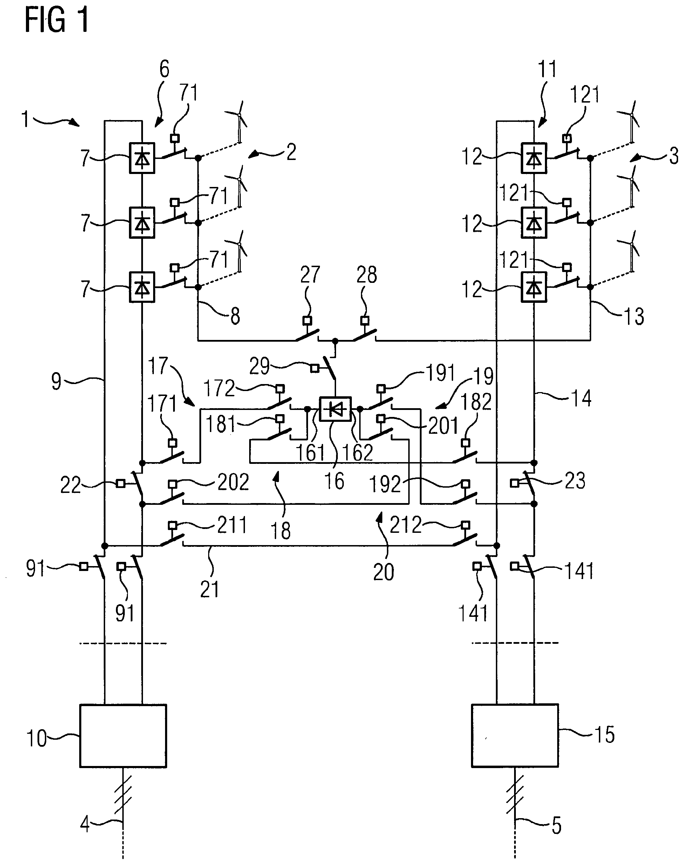

Im Einzelnen ist in Figur 1 ein Ausführungsbeispiel einer erfindungsgemäßen Anlage 1 zum Übertragen elektrischer Leistung zwischen einem ersten Windpark 2, einem zweiten Windpark 3 und einem ersten und zweiten Energieversorgungsnetz 4, 5.

Die in Figur 1 dargestellten Windparks 2 und 3 weisen drei schematisch dargestellte Windkraftanlagen. Es ist jedoch selbstverständlich möglich, jede andere geeignete Anzahl von Windanlagen pro Windpark zu wählen, wobei jeder Windpark auch eine andere Anzahl aufweisen kann.

Die Anlage 1 umfasst eine erste Gruppe 6 von Diodengleichrichtern 7, die wechselspannungsseitig jeweils mit einem ersten Wechselspannungsnetz 8 und über das erste Wechselspannungsnetz 8 mit dem ersten Windpark 2 mittels einer Schaltvorrichtung 71 verbindbar sind. Die Diodengleichrichter 7 sind gleichspannungsseitig in einer Reihenschaltung miteinander verbunden. Ferner sind die Diodengleichrichter 7 über eine erste Gleichspannungsleitung 9 mit einem selbstgeführten Umrichter 10 mittels Schaltvorrichtungen 91 verbindbar. Der selbstgeführte Umrichter 10 ist wechselspannungsseitig mit dem ersten Energieversorgungsnetz 4 verbunden. Die Gleichrichter 7 und 12 sind als Diodengleichrichter ausgebildet.

Die Anlage 1 umfasst ferner eine zweite Gruppe 11 von Diodengleichrichtern 12, die wechselspannungsseitig jeweils mit einem zweiten Wechselspannungsnetz 13 und über das erste Wechselspannungsnetz 13 mit dem zweiten Windpark 3 mittels einer Schaltvorrichtung 121 verbindbar sind. Die Diodengleichrichter 12 sind gleichspannungsseitig in einer Reihenschaltung miteinander verbunden. Ferner sind die Diodengleichrichter 12 über eine zweite Gleichspannungsleitung 14 mittels Schaltvorrichtungen 141 mit einem zweiten selbstgeführten Umrichter 15 verbindbar. Der selbstgeführte Umrichter 15 ist wechselspannungsseitig mit dem zweiten Energieversorgungsnetz 5 verbunden.

Zwischen dem ersten Windpark 2 und dem zweiten Windpark 3 ist ein Reservegleichrichter 16 angeordnet, der ebenfalls ein Diodengleich-richter ist. Der Reservegleichrichter 16 kann wechselspannungsseitig mit dem ersten Wechselspannungsnetz 8 oder dem zweiten Wechselspannungsnetz 13 mittels der Schaltvorrichtungen 27, 28, 29 verbunden werden.

Gleichspannungsseitig verfügt der Reservegleichrichter 16 über zwei Anschlüsse 161 und 162.

Der Anschluss 161 ist mittels einer Schaltvorrichtung 17 mit zwei Schaltelementen 171, 172 mit der Gleichspannungsleitung 9 verbindbar. Der Anschluss 162 ist ferner mittels einer Schaltvorrichtung 18 mit zwei Schaltelementen 181, 182 mit der Gleichspannungsleitung 14 verbindbar.

Der Anschluss 162 ist mittels einer Schaltvorrichtung 19 mit zwei Schaltelementen 191, 192 mit der Gleichspannungsleitung 14 verbindbar. Der Anschluss 162 ist ferner mittels einer Schaltvorrichtung 20 mit zwei Schaltelementen 201, 202 mit der Gleichspannungsleitung 9 verbindbar.

Die Anlage 1 umfasst ferner eine Verbindungsleitung 21 mit zwei Schaltelementen 211, 212 zum Verbinden der Gleichspannungsleitung 9 mit der Gleichspannungsleitung 14. Darüber hinaus weist die Anlage 1 zwei weitere Schaltvorrichtungen 22 und 23 zum Unterbrechen der Gleichspannungsleitung 9 beziehungsweise der Gleichspannungsleitung 14.

In einem Normalbetrieb der Anlage 1 sind die Schaltvorrichtungen 71 sowie 121 geschlossen, so dass die Gleichrichter 7, 12 mit den Wechselspannungsnetzen 8 beziehungsweise 13 verbunden sind. Die Schaltvorrichtungen 91, 141, 22, 23 sind ebenfalls geschlossen. Die erste Gruppe 6 ist somit gleichspannungsseitig mit dem ersten Umrichter 10 und die zweite Gruppe 11 ist mit dem zweiten Umrichter 15 verbunden. Alle übrigen Schaltvorrichtungen sind offen. Der Reservegleichrichter ist also im Normalbetrieb der Anlage 1 weder wechselspannungsseitig noch gleichspannungsseitig mit einem der Netze 2, 3 oder einer der Leitungen 9, 14 verbunden.

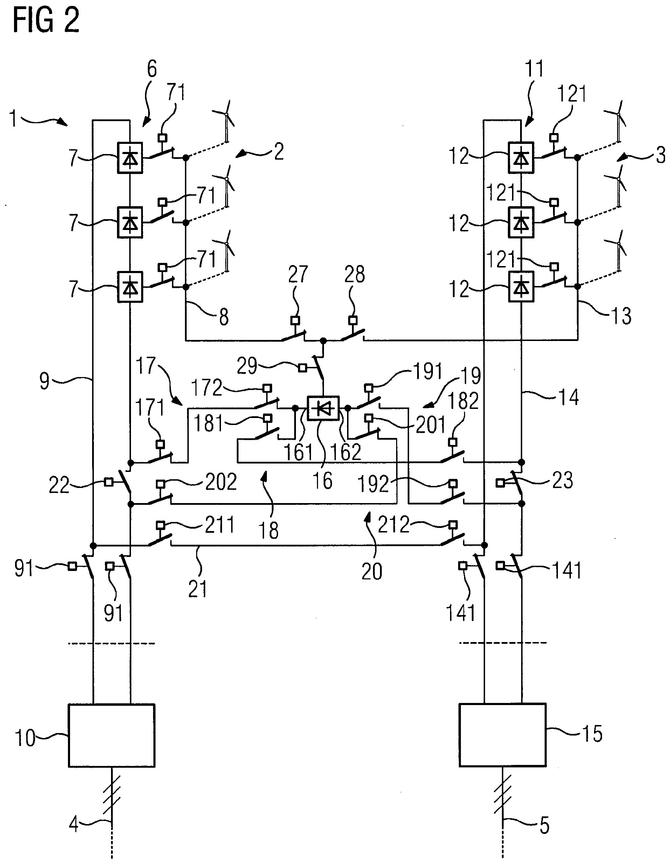

Nachfolgend in den Figuren 2 bis 6 wird die Funktion des Reservegleichrichters anhand von Fallbeispielen näher erläutert.

Figur 2 zeigt die Anlage 1 aus Figur 1, wobei in einem der Gleichrichter 7 der ersten Gruppe 6 ein Fehler aufgetreten ist (in der Darstellung der Figur 2 ist es der zweite Gleichrichter von oben). Entsprechend ist der zugehörige Schaltvorrichtung 71 offen, so dass die Verbindung des Gleichrichters mit dem ersten Wechselspannungsnetz 8 getrennt ist.

Der Reservegleichrichter 16 ist in diesem Fall mittels der nun geschlossenen Schaltvorrichtungen 27 und 29 wechselspannungsseitig mit dem ersten Wechselspannungsnetz 8 verbunden. Gleichspannungsseitig bildet der Reservegleichrichter 16 eine Reihenschaltung mit der ersten Gruppe 6 von Gleichrichtern eine Reihenschaltung, weil er mittels der Schaltvorrichtung 17, wobei die Schaltelemente 171, 172 geschlossen sind, der Schaltvorrichtung 20, wobei auch die Schaltelemente 201, 202 geschlossen sind, mit der ersten Gleichspannungsleitung 9 entsprechend verbunden ist, wobei die Schaltvorrichtung 22 geöffnet ist.

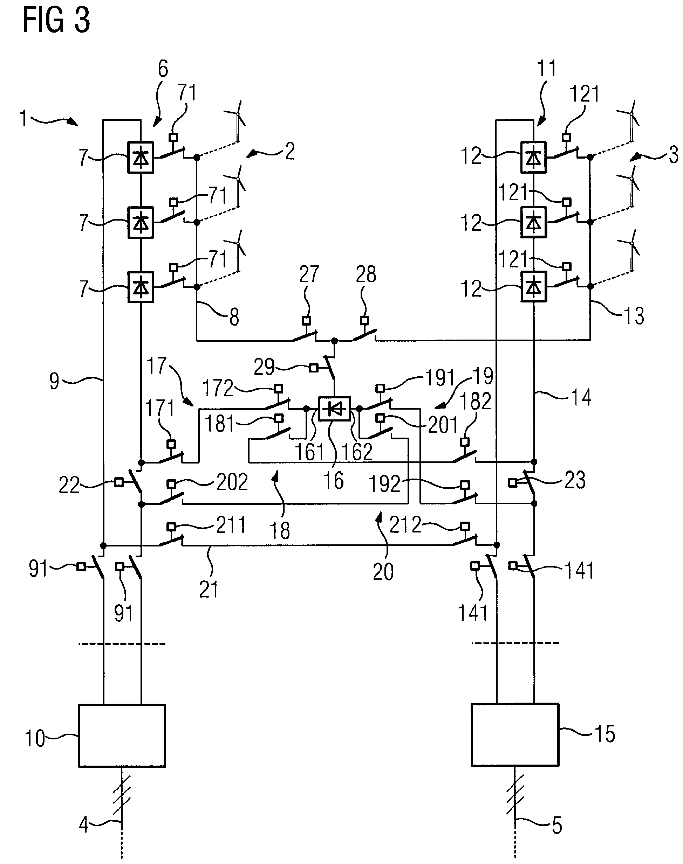

Figur 3 zeigt die Anlage 1 der Figuren 1 und 2, wobei in Figur 3 dargestellt ist, wie im Fehlerfall eines der Gleichrichter 7 der ersten Gruppe 6 (der zweite von oben in der Darstellung der Figur 3) der Reservegleichrichter 16 mit der ersten Gruppe 6 und mit der zweiten Gleichspannungsleitung 14 verbunden ist.

Der Reservegleichrichter 16 ist dementsprechend mittels der geschlossenen Schaltvorrichtungen 27 und 29 wechselspannungsseitig mit dem ersten Wechselspannungsnetz 8 verbunden. Gleichspannungsseitig bildet der Reservegleichrichter 16 eine Reihenschaltung mit der ersten Gruppe 6 von Gleichrichtern eine Reihenschaltung, wobei er mittels der Schaltvorrichtung 17, wobei die Schaltelemente 171, 172 geschlossen sind, mit der ersten Gruppe 6 von Gleichrichtern 7 sowie mittels der Schaltvorrichtung 19, wobei die Schaltelemente 191, 192 geschlossen sind, mit der zweiten Gleichspannungsleitung 14 verbunden ist. Zugleich ist mittels der Schaltvorrichtung 21 mit den geschlossenen Schaltelementen 211, 212 eine Verbindung zwischen der zweiten Gleichspannungsleitung 14 und der ersten Gruppe 6 von Gleichrichtern 7 hergestellt.

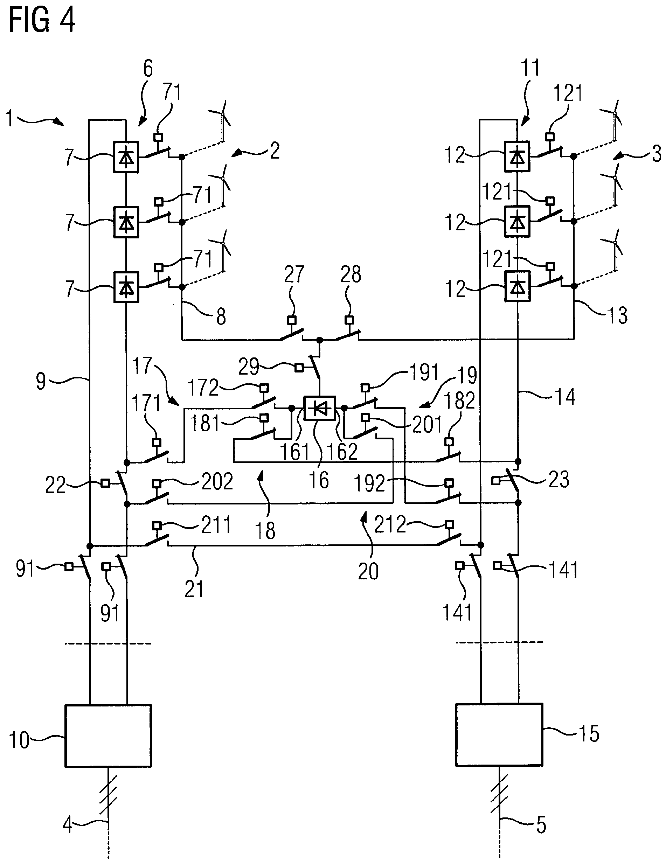

Figur 4 zeigt die Anlage 1 aus Figuren 1 bis 3, wobei in einem der Gleichrichter 12 der zweiten Gruppe 11 von Gleichrichtern ein Fehler aufgetreten ist (in der Darstellung der Figur 4 ist es der zweite Gleichrichter von oben). Entsprechend ist der zugehörige Schaltvorrichtung 121 offen, so dass die Verbindung des Gleichrichters mit dem zweiten Wechselspannungsnetz 13 getrennt ist.

Der Reservegleichrichter 16 ist in diesem Fall mittels der nun geschlossenen Schaltvorrichtungen 28 und 29 wechselspannungsseitig mit dem zweiten Wechselspannungsnetz 13 verbunden. Gleichspannungsseitig bildet der Reservegleichrichter 16 eine Reihenschaltung mit der zweiten Gruppe 11 von Gleichrichtern eine Reihenschaltung, weil er mittels der Schaltvorrichtung 19, wobei die Schaltelemente 191, 192 geschlossen sind, der Schaltvorrichtung 18, wobei auch die Schaltelemente 181, 182 geschlossen sind, mit der zweiten Gruppe 11 entsprechend verbunden ist, wobei die Schaltvorrichtung 23 geöffnet ist.

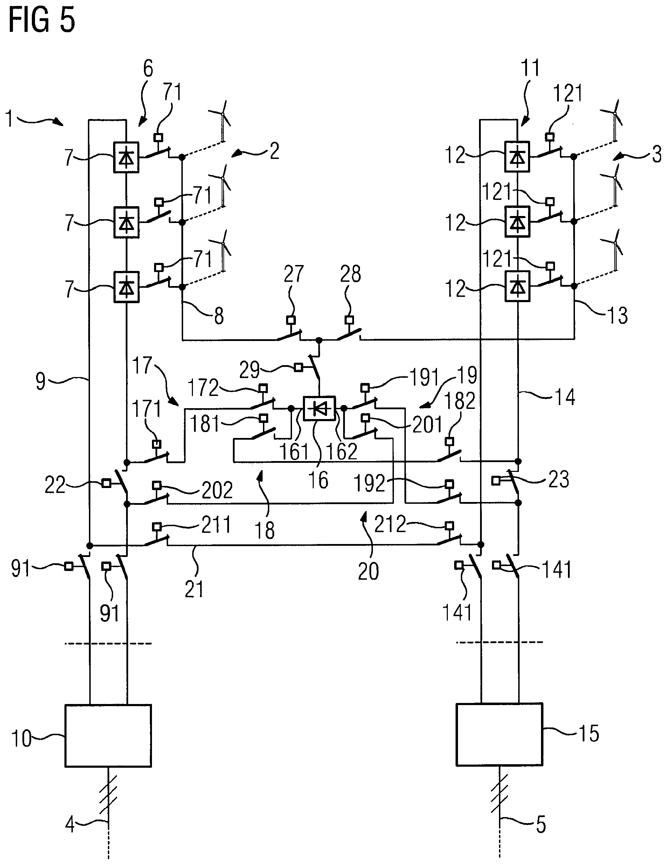

Figur 5 zeigt die Anlage aus den Figuren 1 bis 4, wobei einer der Gleichrichter (der zweite von oben in der gewählten Darstellung) defekt ist. In Figur 5 ersetzt der Reservegleichrichter 16 den fehlerhaften Gleichrichter 7. Zugleich führt die gesamte Übertragung der elektrischen Leistung aus den beiden Windparks 2 und 3 über die erste Gleichspannungsleitung 9.

Dazu sind die Schaltvorrichtungen 27 und 29 geschlossen, womit der Reservegleichrichter 16 an das erste Wechselspannungsnetz 8 angeschlossen ist. Ferner bildet der Reservegleichrichter 16 eine Reihenschaltung mit der ersten Gruppe 6 von Gleichrichtern 7, wobei er hierzu mittels der Schaltvorrichtungen 17 und 20 mit der ersten Gruppe 6 und der ersten Gleichspannungsleitung 9 verbunden ist. Die Schaltvorrichtung 22 ist dabei geöffnet. Ferner ist die zweite Gruppe 11 mittels der Schaltvorrichtungen 21 und 19 mit der ersten Gleichspannungsleitung 9 verbunden. Die Schaltvorrichtungen 141 sind dabei geöffnet und die Schaltvorrichtung 23 geschlossen.

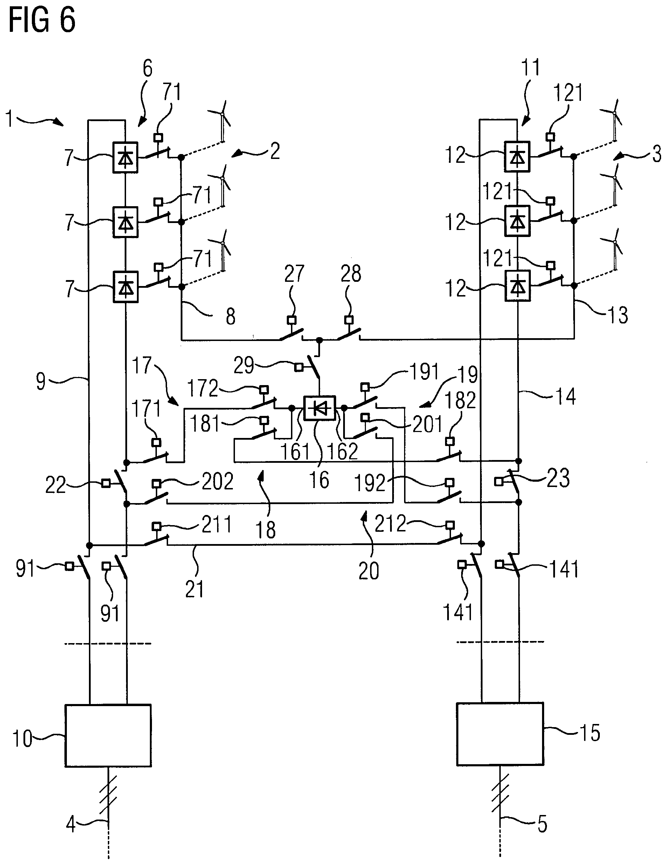

In Figur 6 ist die Anlage 1 der Figuren 1 bis 5 dargestellt, wobei die gesamte Übertragung der elektrischen Leistung aus den beiden Windparks 2 und 3 über die zweite Gleichspannungsleitung 14 erfolgt. Dazu ist die erste Gruppe 6 der Gleichrichter 7 über die Schaltvorrichtungen 17 und 18 sowie 21 mit der zweiten Gleichspannungsleitung 14 verbunden. Die Schaltvorrichtungen 91 sind dabei geöffnet.

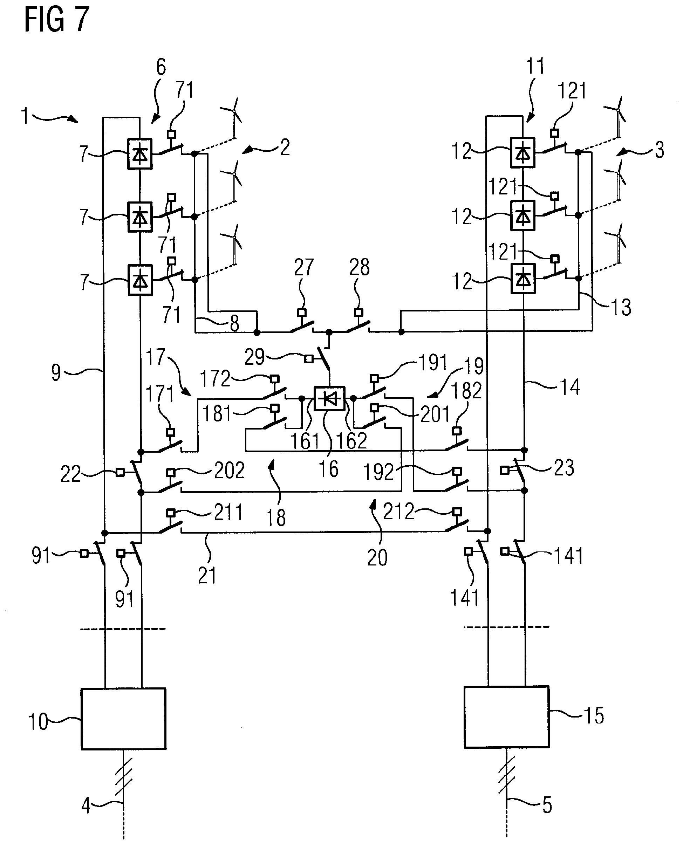

Figur 7 zeigt ein zweites Ausführungsbeispiel der Anlage 1. Das Ausführungsbeispiel der Figur 7 unterscheidet sich von dem Ausführungsbeispiel der Figuren 1 bis 6 lediglich dadurch, dass das erste Wechselspannungsnetz 8 und das zweite Wechselspannungsnetz 13 jeweils eine Ringtopologie (Ring Bus) aufweisen.

## Patentansprüche

1. Anordnung mit einer ersten Gruppe (6) von gleichspannungsseitig eine Reihenschaltung bildenden Gleichrichtern (7), die an ein erstes Wechselspannungsnetz (8) anschließbar sind, sowie mit einem Reservegleichrichter (16), der in einem Fehlerfall eines der Gleichrichter (7) mittels geeigneter Schaltvorrichtungen (17,20,27,29) mit dem ersten Wechselspannungsnetz (8) und gleichspannungsseitig mit einer ersten Gleichspannungsleitung (9) unter Ausbildung einer ergänzten Reihenschaltung mit den Gleichrichtern (7) elektrisch verbindbar ist, so dass der Reservegleichrichter (16) den fehlerhaften Gleichrichter (7) ersetzt.

2. Anordnung nach Anspruch 1, wobei die Anordnung ferner eine zweite Gruppe (11) gleichspannungsseitig eine Reihenschaltung bildender Gleichrichter (12) umfasst, die an ein zweites Wechselspannungsnetz (13) anschließbar sind, wobei der Reservegleichrichter (16) im Fehlerfall eines der Gleichrichter (7) der ersten Gruppe (6) mittels geeigneter Schaltvorrichtungen (27,29,17,19,21) mit dem ersten Wechselspannungsnetz (8) und gleichspannungsseitig mit einer zweiten Gleichspannungsleitung (14) unter Ausbildung einer ergänzten Reihenschaltung mit den Gleichrichtern der ersten Gruppe (6) elektrisch verbindbar ist.

3. Anordnung nach Anspruch 2, wobei der Reservegleichrichter (16) im Fehlerfall eines der Gleichrichter (12) der zweiten Gruppe mittels geeigneter Schaltvorrichtungen (18,19,28,29,23) mit dem zweiten Wechselspannungsnetz (13) und gleichspannungsseitig mit der zweiten Gleichspannungsleitung (14) unter Ausbildung einer ergänzten Reihenschaltung mit den Gleichrichtern der zweiten Gruppe (11) elektrisch verbindbar ist.

4. Anordnung nach Anspruch 3, wobei der Reservegleichrichter (16) im Fehlerfall eines der Gleichrichter (12) der zweiten Gruppe (11) mittels geeigneter Schaltvorrichtungen (28,29,19,20,21,23) mit dem zweiten Wechselspannungsnetz (13) und gleichspannungsseitig mit der ersten Gleichspannungsleitung (9) unter Ausbildung einer ergänzten Reihenschaltung mit den Gleichrichtern der zweiten Gruppe (11) elektrisch verbindbar ist.

5. Anordnung nach Anspruch 4, wobei in einem Fehlerfall der ersten Gleichspannungsleitung (9) die erste Gruppe (6) von Gleichrichtern (7) mittels geeigneter Schaltvorrichtungen mit der zweiten Gleichspannungsleitung (14) verbindbar ist.

6. Anordnung nach Anspruch 5, wobei in einem Fehlerfall der zweiten Gleichspannungsleitung (14) die zweite Gruppe (11) von Gleichrichtern (12) mittels geeigneter Schaltvorrichtungen mit der ersten Gleichspannungsleitung (9) verbindbar ist.

7. Anordnung nach einem der Ansprüche 1 bis 6, wobei die Anordnung ferner einen ersten netz- oder selbstgeführten Umrichter (10) umfasst, wobei der erste Umrichter (10) mit der ersten Gleichspannungsleitung (9) sowie wechselspannungsseitig mit einem ersten Energieversorgungsnetz (4) elektrisch verbindbar ist.

8. Anordnung nach einem der Ansprüche 2 bis 7, wobei die Anordnung ferner einen zweiten netz- oder selbstgeführten Umrichter (15) umfasst, wobei der zweite Umrichter (15) mit der zweiten Gleichspannungsleitung (14) sowie wechselspannungsseitig mit einem zweiten Energieversorgungsnetz (5) elektrisch verbindbar ist.

9. Anlage (1) zum Übertragen elektrischer Leistung zwischen wenigstens einem ersten Windpark (2) mit wenigstens einer Windkraftanlage und einem ersten Energieversorgungsnetz (4), mit einer Anordnung nach einem der vorangehenden Ansprüche 1 bis 8, wobei die erste Gruppe (6) von Gleichrichtern (7) über das erste Wechselspannungsnetz (8) mit dem ersten Windpark verbindbar ist.

10. Anlage (1) nach Anspruch 9, wobei die Anlage (1) zum Übertragen elektrischer Leistung zwischen einem zweiten Windpark (3) und dem zweiten Energieversorgungsnetz (5) eingerichtet ist, wobei die zweite Gruppe (11) von Gleichrichtern (12) über das zweite Wechselspannungsnetz (13) mit dem zweiten Windpark verbindbar ist.

11. Anlage (1) nach Anspruch 9 oder 10, wobei die netz- oder selbstgeführten Umrichter (10,15) an Land, und die Gleichrichter (7,12) meer- oder seeseitig angeordnet sind.

12. Anlage (1) nach einem der Ansprüche 9 bis 11,wobei die Gleichrichter (7,12) Diodengleichrichter sind.

13. Anlage (1) nach einem der Ansprüche 9 bis 12, wobei wenigstens ein Umrichter (10,15) ein modularer Mehrstufenumrichter ist.

14. Anlage (1) nach einem der Ansprüche 9 bis 13, wobei jeder Gleichrichter (7,12) jeweils mittels eines Überbrückungsschalters überbrückbar ist.

15. Anlage (1) nach einem der Ansprüche 9 bis 14, wobei die Anlage eine Mehrzahl von Gruppen von Diodengleichrichtern sowie eine Mehrzahl von Umrichtern, die gleichspannungsseitig über Gleichspannungsleitungen miteinander verbunden sind, wobei die Gleichspannungsleitungen in einer Multiterminal- oder einer vermaschten Netzanordnung miteinander verbunden sind.

## Claims

1. Arrangement having a first group (6) of rectifiers (7) which form a series circuit on the DC voltage side and which can be connected to a first AC voltage network (8), and having a reserve rectifier (16) that, in the event of a fault on one of the rectifiers (7), can be electrically connected by means of appropriate switching devices (17, 20, 27, 29) to the first AC voltage network (8), and on the DC voltage side to a first DC voltage line (9) to form an augmented series circuit with the rectifiers (7), so that the reserve rectifier (16) replaces the faulty rectifier (7).

2. Arrangement according to Claim 1, wherein the arrangement also comprises a second group (11) of rectifiers (12) forming a series circuit on the DC voltage side, which can be connected to a second AC voltage network (13), wherein the reserve rectifier (16), in the event of a fault on one of the rectifiers (7) in the first group (6), is electrically connectable by means of appropriate switching devices (27, 29, 17, 19, 21) to the first AC voltage network (8), and on the DC voltage side to a second DC voltage line (14) to form an augmented series circuit with the rectifiers in the first group (6).

3. Arrangement according to Claim 2, wherein the reserve rectifier (16), in the event of a fault on one of the rectifiers (12) in the second group, is electrically connectable by means of appropriate switching devices (18, 19, 28, 29, 23) to the second AC voltage network (13), and on the DC voltage side to the second DC voltage line (14) to form an augmented series circuit with the rectifiers in the second group (11).

4. Arrangement according to Claim 3, wherein the reserve rectifier (16), in the event of a fault on one of the rectifiers (12) in the second group (11), is electrically connectable by means of appropriate switching devices (28, 29, 19, 20, 21, 23) to the second AC voltage network (13), and on the DC voltage side to the first DC voltage line (9) to form an augmented series circuit with the rectifiers in the second group (11).

5. Arrangement according to Claim 4, wherein, in the event of a fault on the first DC voltage line (9), the first group (6) of rectifiers (7) is connectable by means of appropriate switching devices to the second DC voltage line (14).

6. Arrangement according to Claim 5, wherein, in the event of a fault on the second DC voltage line (14), the second group (11) of rectifiers (12) is connectable by means of appropriate switching devices to the first DC voltage line (9).

7. Arrangement according to one of Claims 1 to 6, wherein the arrangement also comprises a first network- or self-commutated converter (10), whereby the first converter (10) is electrically connectable to the first DC voltage line (9) and, on the AC voltage side, to a first energy supply network (4).

8. Arrangement according to one of Claims 2 to 7, wherein the arrangement also comprises a second network- or self-commutated converter (15), whereby the second converter (15) is electrically connectable to the second DC voltage line (14) and, on the AC voltage side, to a second energy supply network (5).

9. Installation (1) for the transmission of electric power between at least a first wind farm (2), with at least one wind turbine, and a first energy supply network (4), with an arrangement according to one of the preceding Claims 1 to 8, wherein the first group (6) of rectifiers (7) is connectable to the first wind farm via the first AC voltage network (8).

10. Installation (1) according to Claim 9, wherein the installation (1) is designed for the transmission of electric power between a second wind farm (3) and the second energy supply network (5), wherein the second group (11) of rectifiers (12) is connectable to the second wind farm via the second AC voltage network (13).

11. Installation (1) according to Claim 9 or 10, wherein the network- or self-commutated converters (10, 15) are arranged onshore, and the rectifiers (7, 12) are arranged in a sea or lake.

12. Installation (1) according to one of Claims 9 to 11, wherein the rectifiers (7, 12) are diode rectifiers.

13. Installation (1) according to one of Claims 9 to 12, wherein at least one converter (10, 15) is a modular multi-stage converter.

14. Installation (1) according to one of Claims 9 to 13, wherein each rectifier (7, 12) is bridgeable by means of a bypass switch.

15. Installation (1) according to one of Claims 9 to 14, wherein the installation comprises a plurality of groups of diode rectifiers and a plurality of converters, which are interconnected on the DC voltage side by DC voltage lines, wherein the DC voltage lines are interconnected in a multiterminal or meshed network arrangement.

## Revendications

1. Montage, comprenant un premier groupe (6) de redresseurs (7) formant un circuit série du côté de la tension continue et pouvant être connectés à un premier réseau (8) à tension alternative, ainsi qu'un redresseur (16) de réserve, qui, en cas de défaut de l'un des redresseurs (7) peut, au moyen de dispositifs (17, 20, 27, 29) appropriés de commutation, être connecté électriquement au premier réseau (8) à tension alternative et, du côté de la tension continue, à une première ligne (9) de tension continue avec formation d'un circuit série complété avec les onduleurs (7), de manière à ce que le redresseur (16) de réserve remplace le redresseur (7) défectueux.

2. Montage suivant la revendication 1, dans lequel le montage comprend, en outre, un deuxième groupe (11) de redresseurs (12) formant un circuit série du côté de la tension continue et pouvant être connectés à un deuxième réseau (13) à tension alternative, dans lequel le redresseur (16) de réserve peut, en cas de défaut de l'un des redresseurs (7) du premier groupe (6), être, au moyen de dispositifs (27, 29, 17, 19, 21) de commutation appropriés, connecté électriquement au premier réseau (8) à tension alternative et, du côté de la tension continue, à une deuxième ligne (14) à tension continue, avec formation d'un circuit série complété avec les redresseurs du premier groupe (6).

3. Montage suivant la revendication 2, dans lequel le redresseur (16) de réserve peut, en cas de défaut de l'un des redresseurs (12) du deuxième groupe, être, au moyen de dispositifs (18, 19, 28, 29, 23) de commutation appropriés, être connecté électriquement au deuxième réseau (13) à tension alternative et, du côté de la tension continue, à la deuxième ligne (14) à tension continue, avec formation d'un circuit série complété avec les redresseurs du deuxième groupe (11).

4. Montage suivant la revendication 3, dans lequel le redresseur (16) de réserve peut, en cas de défaut de l'un des redresseurs (12) du deuxième groupe (11), être, au moyen de dispositifs (28, 29, 19, 20, 21, 23) de commutation appropriés, être connecté électriquement au deuxième réseau (13) à tension alternative et, du côté de la tension continue, à la première ligne (9) à tension continue, avec formation d'un circuit série complété avec les redresseurs du deuxième groupe (11).

5. Montage suivant la revendication 4, dans lequel, en cas de défaut de la première ligne (9) à tension continue, le premier groupe (6) de redresseurs (7) peut être connecté à la deuxième ligne (14) à tension continue, au moyen de dispositifs de commutation appropriés.

6. Montage suivant la revendication 5, dans lequel, en cas de défaut de la deuxième ligne (14) à tension continue, le deuxième groupe (11) de redresseurs (12) peut être connecté à la première ligne (9) de tension continue au moyen de dispositifs de commutation appropriés.

7. Montage suivant l'une des revendications 1 à 6, dans lequel le montage comprend, en outre, un premier onduleur (10) de réseau ou à commande autonome, le premier onduleur (10) pouvant être connecté électriquement à la première ligne (9) à tension continue, ainsi que, du côté de la tension alternative, à un premier réseau (4) d'alimentation en énergie.

8. Montage suivant l'une des revendications 2 à 7, dans lequel le montage comprend, en outre, un deuxième onduleur (15) de réseau ou à commande autonome, le deuxième onduleur (15) pouvant être connecté électriquement à la deuxième ligne (14) à tension continue, ainsi que, du côté de la tension alternative, à un deuxième réseau (5) d'alimentation en énergie.

9. Système (1) de transport de puissance électrique entre au moins un premier parc (2) éolien, ayant au moins une éolienne, et un premier réseau (4) d'alimentation en énergie, comprenant un montage suivant l'une des revendications précédentes 1 à 8, le premier groupe (6) de redresseurs (7) pouvant être connecté au premier parc éolien par le premier réseau (8) à tension alternative.

10. Système (1) suivant la revendication 9, dans lequel le système est conçu pour transporter de la puissance électrique entre un deuxième parc (3) éolien et le deuxième réseau (5) d'alimentation en énergie, le deuxième groupe (11) de redresseurs (12) pouvant être connecté au deuxième parc éolien par le deuxième réseau (13) à tension alternative.

11. Système (1) suivant la revendication 9 ou 10, dans lequel l'onduleur (10, 15) de réseau ou à commande autonome est monté sur la terre ferme et les redresseurs (7, 12) sont montés du côté de la mer ou d'un lac.

12. Système (1) suivant l'une des revendications 9 à 11, dans lequel les redresseurs (7, 12) sont des redresseurs à diodes.

13. Système (1) suivant l'une des revendications 9 à 12, dans lequel au moins un redresseur (10, 15) est un redresseur modulaire à plusieurs étages.

14. Système (1) suivant l'une des revendications 9 à 13, dans lequel chaque redresseur (7, 12) peut être shunté respectivement au moyen d'un interrupteur de shuntage.

15. Système (1) suivant l'une des revendications 9 à 14, dans lequel le système comprend une pluralité de groupes de redresseurs à diodes, ainsi qu'une pluralité de redresseurs, qui sont connectés ensemble du côté de la tension continue par des lignes à tension continue, les lignes à tension continue étant reliées entre elles suivant un montage de réseau à bornes multiples ou maillé.
